# EUROPÄISCHE PATENTSCHRIFT

(11) **EP 4 522 429 B1**
(45) Veröffentlichungstag und Bekanntmachung des Hinweises auf die Patenterteilung: **06.05.2026**
(21) Anmeldenummer: 23714501.6
(22) Anmeldetag: 22.03.2023
(51) Int. Cl.: B60C 11/24

(54) **VERFAHREN, STEUERGERÄT UND SYSTEM ZUR ERMITTLUNG DER PROFILTIEFE EINES REIFENS**
METHOD, CONTROL UNIT AND SYSTEM FOR DETERMINING THE TREAD DEPTH OF A TIRE
PROCÉDÉ, UNITÉ DE COMMANDE ET SYSTÈME POUR DÉTERMINER LA PROFONDEUR DE BANDE DE ROULEMENT D'UN PNEU

(30) Priorität: 13.05.2022 DE 102022204695
(43) Veröffentlichungstag der Anmeldung: 19.03.2025
(73) Patentinhaber: Continental Reifen Deutschland GmbH, 30175 Hannover (DE)
(72) Erfinder: KURZ, Martin, 30175 Hannover (DE); GUINART, Nicolas, 31100 Toulouse (FR); DHARAMSHI, Parthiv, 30175 Hannover (DE)
(74) Vertreter: Continental Corporation
(86) Internationale Anmeldenummer: PCT/EP2023/057372
(87) Internationale Veröffentlichungsnummer: WO 2023/217444

(56) Entgegenhaltungen:
- DE-A1- 102017 113 172
- DE-A1- 102017 204 648
- DE-B3- 102012 217 901

## Beschreibung

Die Erfindung betrifft ein Verfahren zum Ermitteln der Profiltiefe eines Profils eines an einem Fahrzeug auf einer Felge montierten Reifens, bei welchem in Nutzungsphasen fortlaufend dessen aktueller dynamischer Rollradius ermittelt wird, indem eine aktuelle Drehgeschwindigkeit des Reifens aus von einem ersten Sensor ermittelten Daten und eine aktuelle Geschwindigkeit des Fahrzeuges aus von einem zweiten Sensor ermittelten Daten bestimmt werden und auf Basis der ermittelten aktuellen Drehgeschwindigkeit des Reifens und der aktuellen Geschwindigkeit des Fahrzeuges der aktuelle dynamische Rollradius ermittelt wird, wobei zu Beginn einer ersten Nutzungsphase ein Startwert des dynamischen Rollradius aufgezeichnet wird und aus Abweichungen des aktuellen dynamischen Rollradius vom Startwert eine aktuelle Profiltiefe des Reifens ermittelt wird. Die Erfindung betrifft ferner auch ein Steuergerät und ein System für ein Fahrzeug zur Ermittlung der Profiltiefe eines Profils eines an dem Fahrzeug montierten Reifens.

Auf dem Gebiet der Ermittlung der tatsächlichen Profiltiefe eines an einem Fahrzeug montierten Reifens ist der sogenannte rollradiusbasierte Ansatz ein sehr erfolgversprechendes Verfahren, um die aktuelle Profiltiefe eines an einem Fahrzeug montierten Reifens abzuschätzen, ohne dass es einer manuellen Messung am Reifen bedarf. Das Grundprinzip dieses Verfahrens beruht darauf, dass der dynamische Rollradius des Reifens und damit auch die Umdrehungen desselben pro zurückgelegter Distanz einer Veränderung unterliegen, wenn die aktuelle Profiltiefe aufgrund von Reifenverschleiß abnimmt. Der dynamische Rollradius nimmt in diesem Fall bei einem gegebenen Reifenluftdruck und einer gegebenen Reifenlast ab, wohingegen die Anzahl der Umdrehungen des Reifens pro zurückgelegter Distanz und damit auch dessen Geschwindigkeit zunehmen. Beispielhaft sei hierzu auf die DE 10 2012 217 901 B3 verwiesen.

Unter Nutzung eines fahrzeugseitigen GPS-Empfängers wird die Fahrzeuggeschwindigkeit und z.B. unter Nutzung von Raddrehzahlsensoren die aktuelle Drehgeschwindigkeit des Reifens ermittelt. Aus diesen Werten wird der dynamische Rollradius bestimmt. Aus einem Vergleich eines Startwertes des dynamischen Rollradius zu Beginn der ersten Nutzungsphase mit dem aktuell ermittelten dynamischen Rollradius kann aus dessen Abnahme über die Zeit die aktuelle Profiltiefe des Reifens kalkuliert werden, wobei mittels mathematischer Methoden versucht wird, die ermittelten Werte stabil zu halten und unweigerlich vorhandene Störungen und Schwankungen in den vom ersten und zweiten Sensor ermittelten Daten zu eliminieren.

Allerdings besteht das Problem, dass im Falle einer Nichtnutzung des Reifens über eine längere Zeitdauer, d.h. in einer Nichtnutzungsphase, der zuletzt berechnete aktuelle Wert des dynamischen Rollradius gespeichert wird und dieser Wert dann bei erneuter Nutzung des Reifens für die fortgesetzte Berechnung bzw. Ermittlung der aktuellen Profiltiefe verwendet wird. Insbesondere bei Reifen, die als Komplettradsätze auf den Felgen montiert bleiben und zum Beispiel als Satz von Sommer- oder Winterreifen nur eine mehrmonatige Nutzungsphase aufweisen, die von einer mehrmonatigen Nichtnutzungsphase gefolgt wird, zeigt sich dabei ein Problem, da aufgrund unvermeidlicher Kriech- oder Alterungseffekte des verwendeten Gummimaterials oder anderer Teile des Reifens sich die physikalischen Abmessungen des Reifens verändern. Insbesondere wenn ein Reifen als Komplettrad unter Beaufschlagung mit dem vorgesehenen Reifendruck in einer Nichtnutzungsphase gelagert wird, neigt ein solcher Reifen dazu, seinen Durchmesser zu vergrößern, wodurch auch der dynamische Rollradius verändert wird und das Ermittlungsergebnis der aktuellen Profiltiefe in einer nachfolgenden Nutzungsphase des Reifens verfälscht werden kann.

Aufgabe der Erfindung ist es daher, ein Verfahren, ein Steuergerät und ein System zum Ermitteln einer Profiltiefe eines Profils eines Reifens anzugeben, welches die Nichtnutzung bzw. Lagerung des Reifens bei der Ermittlung der Profiltiefe berücksichtigt.

Zur Lösung der gestellten Aufgabe wird erfindungsgemäß ein Verfahren gemäß den Merkmalen des Patentanspruchs 1 vorgeschlagen.

Vorteilhafte Ausgestaltungen und Weiterbildungen des erfindungsgemäßen Verfahrens sind Gegenstand der abhängigen Ansprüche.

Ein Steuergerät zur Lösung der gestellten Aufgabe ist Gegenstand des Patentanspruchs 9 und ein System ist Gegenstand des Patentanspruchs 10.

Erfindungsgemäß wird vorgesehen, dass zusätzlich ein aktueller Bewegungsstatus des Reifens aus von einem dritten Sensor ermittelten Daten bestimmt wird, indem bei Vorliegen eines oberhalb eines vorgegebenen Grenzwertes ermittelten Daten eine Nutzungsphase als Bewegungsstatus ermittelt wird und bei Vorliegen von unterhalb eines vorgegebenen Grenzwertes über eine vorbestimmte Zeitdauer ermittelten Daten eine Nichtnutzungsphase als Bewegungsstatus ermittelt wird, und bei einer Änderung des Bewegungsstatus von einer Nichtnutzungsphase zu einer nachfolgenden Nutzungsphase die Aufzeichnung eines neuen Startwertes des dynamischen Rollradius bewirkt wird, der anstelle des vorherigen Startwertes mit den nachfolgend ermittelten aktuellen dynamischen Rollradien zur fortgesetzten Ermittlung der aktuellen Profiltiefe verglichen wird.

Mit anderen Worten wird bei Ermittlung einer Nichtnutzungsphase über eine entsprechend festgelegte vorbestimmte Zeitdauer ein Bewegungsstatus erzeugt, der bei Wiederaufnahme der Nutzungsphase zunächst die Festlegung eines neuen Startwertes des dynamischen Rollradius bewirkt, der gegen den in der vorangehenden Nutzungsphase festgelegten Startwert ausgetauscht wird und als Vergleichswert den ermittelten aktuellen dynamischen Rollradien und der daraus bewirkten Ermittlung der aktuellen Profiltiefe gegenübergestellt wird. Auf diese Weise werden Dimensionsänderungen des Reifens während dessen Nichtbenutzungsphasen automatisch berücksichtigt, da sie in den neu ermittelten Startwert einfließen.

Dabei wird hier und im Folgenden unter dem dynamischen Rollradius derjenige Rollradius verstanden, den ein starres Rad aufweist, um bei einer bestimmten Geschwindigkeit denselben Abrollumfang zu besitzen, den der reale Reifen bei dieser Geschwindigkeit besitzt. Der Abrollumfang ist dabei die Strecke, die ein Rad bei einer Umdrehung schlupffrei zurücklegt.

Zur Ermittlung des Bewegungsstatus des Reifens wird nach einem Vorschlag der Erfindung ein Beschleunigungssensor als dritter Sensor verwendet, welcher Daten über die radiale oder tangentiale Beschleunigung des Reifens oder die entsprechende Änderung der Beschleunigung liefert. Auch kann ein Magnetsensor als dritter Sensor vorgesehen sein.

Der Grenzwert der vom dritten Sensor ermittelten Beschleunigung, der bei Vorliegen über einen vorbestimmten Zeitraum die Erzeugung einer Nichtnutzungsphase als Bewegungsstatus auslöst, liegt bei einem für die Reifennutzung am Fahrzeug untypisch niedrigen Beschleunigungswert oder ist gleich Null.

Die vorbestimmte Zeitdauer, nach der bei konstant unterschrittenem Grenzwert die Nichtnutzungsphase als Bewegungsstatus erzeugt wird, kann vom Fachmann beliebig gewählt werden, solange sie so bemessen ist, dass sie geeignet ist, beispielsweise den Wechsel von Sommer- auf Winterreifen und die damit verbundene Nichtnutzungsphase durch Einlagerung des jeweils anderen Reifensatzes anzuzeigen. Beispielsweise kann die Zeitdauer auf mindestens 14 Tage, mindestens 30 Tage oder dergleichen festgesetzt werden.

Der erste Sensor zur Ermittlung der aktuellen Drehgeschwindigkeit des Reifens kann beispielsweise ein am Fahrzeug verbauter Drehzahlsensor sein, wie er von üblichen Assistenzsystemen, etwa ABS- oder ESP-Systemen genutzt wird. Dadurch kann die Drehgeschwindigkeit des Reifens in einfacher und zuverlässiger Weise ermittelt werden.

Das Ermitteln der aktuellen Drehgeschwindigkeit des Reifens beinhaltet dabei typischerweise ein Ermitteln einer aktuellen Winkelgeschwindigkeit des Reifens.

Nach einem Vorschlag der Erfindung wird als dritter Sensor zur Bestimmung des aktuellen Bewegungsstatus des ein dem Reifen zugeordneter Sensor eines Reifendruckkontrollsystems (TPMS) verwendet. Derartige Sensoren sind üblicherweise in der Lage, den Reifendruck und die Temperatur zu messen und sind typischerweise auch mit einem Beschleunigungssensor ausgerüstet, um festzustellen, ob der Reifen bzw. das Komplettrad verwendet wird und ein Signal zu einem entsprechenden fahrzeugseitigen Empfänger gesendet werden soll. Eine solche Signalübermittlung wird üblicherweise nur vorgenommen, wenn das Fahrzeug in Benutzung ist, um den Energieverbrauch zu begrenzen, obwohl die Sensoren den Druck, die Temperatur und die Beschleunigung auch im Stillstand messen, jedoch nicht an den fahrzeugseitigen Empfänger übermitteln. Typischerweise wechselt ein solcher TPMS-Sensor in einen Parkzustand, wenn er eine konstante und geringe radiale Beschleunigung von weniger als 3g für eine minimale Zeitdauer von beispielsweise 15 Minuten ermittelt. Dann werden der Druck, die Temperatur und die Beschleunigung nur noch periodisch, zum Beispiel alle 16 Sekunden gemessen, ein Mittelwert gebildet und dieser gespeichert. Wenn nun ein solcher Sensor über mehrere Messungen über die vorbestimmte Zeitdauer feststellt, dass diese charakteristisch für eine längere Lagerung sind, zum Beispiel aufgrund eines saisonalen Einlagerns, kann daraus eine Nichtnutzungsphase als Bewegungsstatus erzeugt werden, der an die fahrzeugseitige Empfangsvorrichtung übermittelt wird, sobald der TPMS-Sensor eine erneute Nutzung am Fahrzeug feststellt, d. h. eine neue aktuelle radiale Beschleunigung ermittelt, die auf einen Wechsel aus der Nichtnutzungsphase in eine anschließende erneute Nutzungsphase hindeutet und eine entsprechende Änderung des Bewegungsstatus des Reifens hervorruft.

Nach einem Vorschlag der Erfindung kann bei Ermittlung einer Nichtnutzungsphase des Reifens ein entsprechender Signalwert gesetzt oder erzeugt werden, der nachfolgend an die fahrzeugseitige Empfangsvorrichtung gesendet werden kann und auf den Wechsel aus einer Nichtnutzungsphase in eine Nutzungsphase hindeutet.

Beispielsweise kann der TPMS-Sensor, sobald er einen neuen Fahrzyklus bzw. eine neue Nutzungsphase ermittelt, d. h. eine radiale Beschleunigung höher als der vordefinierte Grenzwert festgestellt wird, die während der Lagerung erzeugten Informationen, insbesondere den durchschnittlichen Druck, Temperatur, Beschleunigung und den Signalwert während der ersten Minuten nach dem Initialisieren des neuen Fahrzyklus periodisch an die fahrzeugseitige Empfangsvorrichtung übermitteln, zum Beispiel während 10 Minuten. Die Übermittlung des Signalwertes löst die Aufzeichnung eines neuen Startwertes des dynamischen Rollradius aus, der anstelle des vorherigen Startwertes gesetzt wird und mit den nachfolgend ermittelten aktuellen dynamischen Rollradien zur fortgesetzten Ermittlung der aktuellen Profiltiefe verglichen wird. Es wird somit nach wieder aufgenommener Nutzungsphase ein neuer Lernzyklus gestartet, um die neue Reifengeometrie zu ermitteln und die Parameter einzustellen, die in die Berechnung der aktuellen Profiltiefe des Reifens einfließen. Der erzeugte Signalwert wird sodann wieder gelöscht. Anstelle eines gesetzten Signalwertes könnte auch über eine Messung der Zeitdauer der Nichtnutzungsphase und die Überschreitung der vorbestimmten Zeitdauer von z.B. 14 oder 30 Tagen die Aufzeichnung eines neuen Startwertes und dessen Verwendung anstelle des bisherigen Startwertes unmittelbar veranlasst werden.

Auf diese Weise werden während der Nichtnutzungsphase des Reifens über die vorbestimmte Zeitdauer eingetretene Dimensionsänderungen selbsttätig bei der nachfolgend fortgesetzten Ermittlung der aktuellen Profiltiefe in der Nutzungsphase berücksichtigt.

Es versteht sich, dass die Neuaufzeichnung eines Startwertes und der Ersatz des vorherig verwendeten Startwertes durch diesen neu aufgezeichneten Startwert beliebig oft im Rahmen des erfindungsgemäßen Verfahrens im Anschluss an eine längere Lagerungsdauer, die eine Erzeugung des Bewegungsstatus als Nichtnutzungsphase nach sich gezogen hat, wiederholt werden kann.

In einer weiteren Ausgestaltung der Erfindung kann der TPMS-Sensor einen Zähler für die längeren Lagerungsphasen verwalten, der nach jeder durchlaufenen längeren Lagerungsphase inkrementell erhöht wird. Mit dieser Information können Fälle seltener Nutzung des Reifens abgedeckt werden, bei denen der betreffende Reifen im Laufe der Zeit auf verschiedenen Fahrzeugen montiert werden könnte, mit abwechselnden Nutzungsphasen und Nichtnutzungsphasen, und so möglicherweise mehrere längere Nichtnutzungsphasen erfährt, ohne die Möglichkeit zu haben, die Information an jedes Fahrzeug zu melden.

Ohne einen solchen Zähler für längere Nichtnutzungsphasen würde ein erstes Fahrzeug über eine Nichtnutzungsphase informiert werden, während ein zweites Fahrzeug, das nachfolgend mit diesem Reifen ausgerüstet wird, nicht in der Lage wäre, eine solche "frühere" Nichtnutzungsphase zu erkennen.

Unter Einbeziehung eines Zählers kann das betreffende Fahrzeug durch den Vergleich des vom TPMS-Sensor gemeldeten aktuellen Wertes des Zählers für die Nichtnutzungsphasen mit dem letzten dem betreffenden Fahrzeug bekannten Wert entscheiden, die Aufzeichnung eines neuen Startwertes auszulösen.

Nach einem Vorschlag der Erfindung wird zur Ermittlung des dynamischen Rollradius auf Daten der aktuellen Geschwindigkeit eines Fahrzeuges zurückgegriffen, die von einem zweiten Sensor ermittelt werden, welcher ausgewählt ist aus der Gruppe, umfassend einen satellitengestützten Sensor, d. h. einen GPS-Sensor, einen Radarsensor, einen Lidarsensor, einen Ultraschallsensor und eine optische Kamera, die allesamt eine präzise Ermittlung der tatsächlichen Fahrzeuggeschwindigkeit über Grund ermöglichen. Auch jeglicher weitere Sensor, welcher die Geschwindigkeit unabhängig von der Raddrehzahl liefert, ist als zweiter Sensor im Sinne der Erfindung geeignet.

Bei der Ermittlung der aktuellen Profiltiefe können nach einem weiteren Vorschlag der Erfindung zur Steigerung der Genauigkeit auch Korrekturfaktoren berücksichtigt werden, die beispielsweise die Reifendimension, den Reifendruck, die Reifenart, die Temperatur, die Reifenlast und/oder das Reifenalter berücksichtigen.

Darüber hinaus kann nach einem weiteren Vorschlag der bei Ermittlung einer Nichtnutzungsphase auch die horizontale oder vertikale Orientierung des Reifens während der Lagerung ermittelt werden, insbesondere über den in die Messung einbezogenen Beschleunigungssensor, da diese Lagerungsorientierung einen Einfluss auf die Veränderung der geometrischen Eigenschaften des Reifens während der Nichtnutzung hat. Es ist beispielsweise bekannt, dass bei vertikaler Lagerung eines Reifens unter Belastung Standplatten am Umfang des Reifens entstehen können, die eine Verringerung des Abrollumfangs zur Folge haben. Dies kann dann im Rahmen der Erfindung durch entsprechende Korrekturfaktoren berücksichtigt werden.

Die in der vorangehend beschriebenen Weise ermittelte aktuelle Profiltiefe des Reifens kann beispielsweise an die Fahrzeugelektronik des Fahrzeugs übermittelt werden, um entsprechenden Servicebedarf zu berechnen und/oder im Fahrzeug angezeigt zu werden, um beispielsweise den Fahrzeugnutzer über das Erreichen der erforderlichen Mindestprofiltiefe und einen entsprechend anstehenden Austausch der Reifen zu informieren. Überdies kann die ermittelte aktuelle Profiltiefe auch entsprechenden Fahrdynamik-Regelsystemen des Fahrzeuges zur Verfügung gestellt werden, um deren Regelparameter zu beeinflussen. Die ermittelte Profiltiefe kann im Rahmen einer Telemetrieanwendung auch an einen entfernt gelegenen Steuerstand des Fahrzeuges übermittelt werden, um die Profiltiefe und den Zustand der Reifen auch aus der Entfernung zu überwachen, was beispielsweise für Fuhrparkmanagement, CarSharing-Anbieter und dergleichen von Vorteil ist.

Die Erfindung betrifft zudem ein Steuergerät für ein Fahrzeug zum Ermitteln der Profiltiefe eines Profils eines am Fahrzeug montierten Reifens. Das Steuergerät weist zumindest eine Empfangsvorrichtung zum Empfangen einer aktuellen Drehgeschwindigkeit des Reifens und einer aktuellen Geschwindigkeit des Fahrzeugs auf. Zudem weist es eine Ermittlungseinrichtung zum Ermitteln eines dynamischen Rollradius des Reifens basierend auf der ermittelten aktuellen Drehgeschwindigkeit des Reifens und der aktuellen Geschwindigkeit des Fahrzeuges im Vergleich zu einem festlegbaren Startwert auf, wobei die Empfangsvorrichtung zum Empfang eines Nutzungs- und Nichtnutzungsphasen umfassenden Bewegungsstatus ausgebildet ist und die Ermittlungseinrichtung bei Änderung des Bewegungsstatus von einer Nichtnutzungsphase in eine Nutzungsphase von der Empfangsvorrichtung derart ansteuerbar ist, dass ein neuer Startwert des dynamischen Rollradius festlegbar und anstelle des vorherigen Startwertes zum Ermitteln der Profiltiefe verwendbar ist.

Das Steuergerät kann als eigenständiges Steuergerät für das Fahrzeug ausgebildet oder Bestandteil eines weiteren Steuergerätes sein, beispielsweise eines Steuergeräts der TPMS-Sensoren eines Reifendrucküberwachungssystems, eines Antiblockiersystems und/oder eines Fahrdynamikregelsystems.

Weiterhin betrifft die Erfindung ein System für ein Fahrzeug zur Ermittlung der Profiltiefe eines Profils eines auf einer Felge am Fahrzeug montierten Reifens. Das System weist ein Steuergerät gemäß der genannten Ausführungsform auf, wobei der Bewegungsstatus von einem Sensor eines dem Reifen zugeordneten Reifendruckkontrollsystems erzeugbar ist.

Nachfolgend wird eine Ausführungsform der Erfindung anhand der beigefügten Figuren näher erläutert.

Figur 1 zeigt eine schematische Seitenansicht eines an einem hier nicht dargestellten Fahrzeug befestigten bzw. montierten Reifens.

Figur 2 zeigt ein Diagramm, in welchem der Verlauf des dynamischen Rollradius eines Reifens über dessen Nutzungsdauer aufgezeichnet ist.

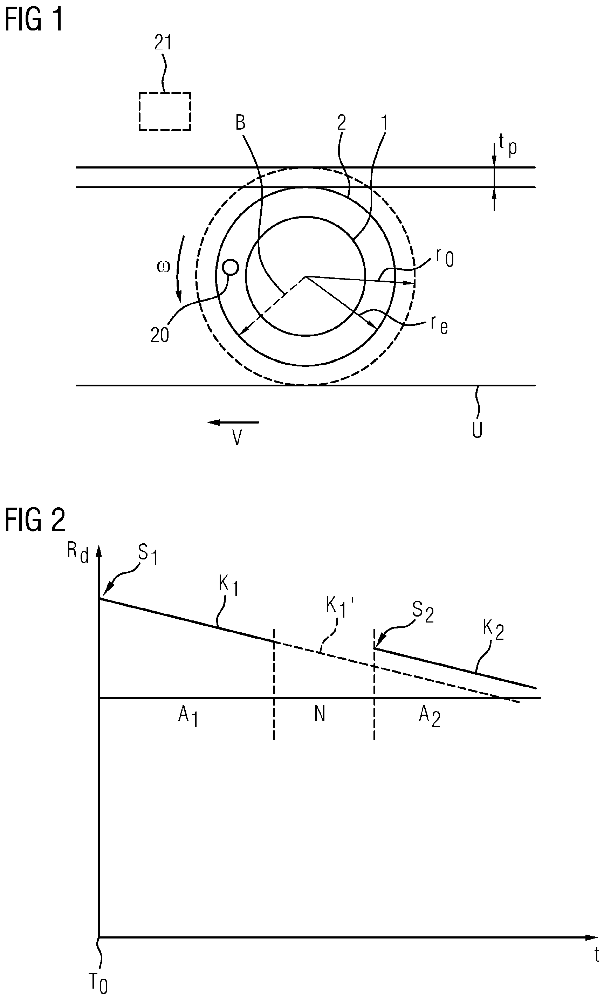

In der schematischen Darstellung gemäß Figur 1 ist ein Reifen 2 dargestellt, der auf einer Felge 1 montiert und gemeinsam mit dieser als Komplettrad an einem hier nicht dargestellten Kraftfahrzeug angebracht ist. Der Reifen 2 rollt mit seinem Außenumfang am Untergrund U ab, wobei der ursprüngliche Radius r₀ des Reifens 2 mit strichlierten Linien dargestellt ist und der Radius zum Ende der Nutzungsdauer mit rₑ gekennzeichnet und mit ausgezogenen Linien eingezeichnet ist. Die Differenz zwischen dem ursprünglichen Radius r₀ und dem Radius rₑ zum Ende der Nutzungsdauer stellt die nutzbare Profiltiefe tₚ des Reifens 2 dar. Die aktuell vorhandene Profiltiefe tₚ ist damit ein Maß dafür, ob der Reifen 2 noch Verwendung finden kann, da er sich noch in seiner vorgesehenen Nutzungsdauer befindet oder aber durch Erreichen des Radius rₑ zum Ende der Nutzungsdauer auf die Mindestprofiltiefe reduziert worden ist, sodass ein Austausch des Reifens 2 erforderlich wird.

Um die Profiltiefe tₚ des Profils des Reifens 2 während der Nutzung am Fahrzeug zu ermitteln, ohne eine manuelle Messung vorzunehmen, wird in an sich bekannter Weise, z.B. gemäß WO 2014053322 A1 mittels eines hier nicht dargestellten ersten fahrzeugseitigen Sensors die aktuelle Drehgeschwindigkeit ω des Reifens 2 ermittelt, beispielsweise durch entsprechende Drehzahlsensoren eines ABS- oder ESP-Systems.

Darüber hinaus wird von einem zweiten fahrzeugseitigen Sensor, beispielsweise einem GPS-Sensor 21 des fahrzeugseitig eingebauten Navigationssystems, die tatsächliche Geschwindigkeit V des Fahrzeuges mitsamt der daran montierten Reifen 2 in horizontaler Richtung über dem Untergrund U ermittelt. Aus diesen ermittelten Daten für die aktuelle Drehgeschwindigkeit ω des Reifens 2 und die aktuelle Geschwindigkeit V des Fahrzeuges wird der aktuelle dynamische Rollradius R_{d} ermittelt, gemäß der Gleichung R_{d} = V/ω.

Zu Beginn der Nutzungsdauer des Reifens 2 wird ein Startwert S₁ des dynamischen Rollradius R_{d} aufgezeichnet, wie er aus der grafischen Darstellung gemäß Figur 2 zum Zeitpunkt T₀ ersichtlich ist.

Nachfolgend werden kontinuierlich oder in festgelegten Zeitabständen fortlaufend aktuelle Drehgeschwindigkeiten ω des Reifens 2 und zugehörige aktuelle Geschwindigkeiten V des Fahrzeuges aus den vom ersten und zweiten Sensor 21 ermittelten Daten bestimmt, der zugehörige dynamische Rollradius R_{d} ermittelt und mit dem Startwert S₁ verglichen. Da verschleißbedingt der Radius des Reifens 2 ausgehend vom ursprünglichen Radius r₀ in Richtung auf den Radius rₑ abnimmt, nimmt dementsprechend auch der dynamische aktuelle Rollradius R_{d} ab, was unmittelbar proportional zur aktuellen Profiltiefe tₚ ist, sodass sich diese aus der beobachteten Abweichung des aktuellen dynamischen Rollradius R_{d} vom Startwert S₁ ermitteln lässt.

In der Figur 2 erkennt man, dass beispielsweise bei einem Sommerreifen über die erste Nutzungsphase A₁ der dynamische Rollradius R_{d} und entsprechend die daraus ermittelte aktuelle Profiltiefe tₚ verschleißbedingt entlang einer abfallenden Linie K₁ abnimmt. Mit Abschluss der ersten Nutzungsphase A₁ wird dieser Reifen 2 gegen beispielsweise einen Winterreifen ausgetauscht und für die Dauer der Nutzung der Winterreifen in einer entsprechenden Nichtnutzungsphase N eingelagert, d. h. die radiale Beschleunigung B des Reifens 2 weist kontinuierlich den Wert "0" auf.

Um diesen Stillstand des Reifens 2 auch bei nicht am Fahrzeug montierter Einlagerung ermitteln zu können, wird ein an der Felge 1 des Reifens 2 verbauter Sensor 20 eines Reifendruckkontrollsystems (TPMS-Sensor) genutzt, der neben dem Reifendruck und der Reifentemperatur auch die auf den Reifen 2 einwirkende radiale Beschleunigung B mittels eines entsprechenden Beschleunigungssensors ermittelt, woraus ein Bewegungsstatus des Reifens 2 abgeleitet werden kann, der entweder als Nutzungsphase A₁, A₂ oder als Nichtnutzungsphase N ermittelt wird.

Eine vom Sensor 20 ermittelte radiale Beschleunigung B oberhalb eines vorgegebenen Grenzwertes führt dazu, dass der Bewegungsstatus als Nutzungsphase A₁, A₂ bestimmt wird.

Sobald jedoch die ermittelte radiale Beschleunigung B über eine vorbestimmte Zeitdauer von beispielsweise 30 Tagen unter einem vorgegebenen Grenzwert verbleibt, wird der Bewegungsstatus als Nichtnutzungsphase N bestimmt und der Sensor 20 erzeugt einen Signalwert, der neben den periodisch abgespeicherten Werten für Reifendruck und Temperatur im Sensor 20 abgelegt wird.

Sobald zum Ende der Nichtnutzungsphase N ein erneuter Wechsel der Räder ansteht und die derzeit eingelagerten Reifen 2 wieder in Benutzung genommen werden, in der Darstellung gemäß Figur 2 über die Nutzungsphase A₂, sendet der Sensor 20 des Reifendruckkontrollsystems seine während der Nichtnutzungsphase N abgespeicherten Messwerte sowie den erzeugten Signalwert an eine fahrzeugseitige Empfangsvorrichtung, wobei der neben den Reifendruck- und Temperaturwerten mitgesendete Signalwert bewirkt, dass bei der erneut einsetzenden Ermittlung des dynamischen Rollradius R_{d} zunächst ein neuer Startwert S₂ ermittelt wird, der anstelle des vorherigen Startwertes S₁ der weiteren Messwertanalyse zugrundegelegt wird.

Einem typischen Verhalten eines unter Fülldruck stehenden eingelagerten Reifens 2 folgend hat dieser während Nichtnutzungsphase N durch die dem Reifenmaterial innewohnenden mechanischen Eigenschaften eine Vergrößerung seines Radius erfahren, sodass eine Fortsetzung des Vergleichs der Abweichungen des aktuellen dynamischen Rollradius R_{d} vom Startwert S₁ entlang der aus der Linie K₁ fortgesetzten gedachten Linie K₁' zu einer Verfälschung des Messergebnisses führen würde, da dieser radiale Zuwachs des Reifens 2 unberücksichtigt bliebe.

Durch Festlegung des neuen Startwertes S₂ zu Beginn der nächsten auf die Nichtnutzungsphase N folgenden Nutzungsphase A₂ wird der aus der Darstellung gemäß Figur 2 als vertikaler Versatz sichtbare radiale Zuwachs berücksichtigt und die nachfolgend ermittelten aktuellen dynamischen Rollradien R_{d} werden entlang der Linie K₂ mit dem neuen Startwert S₂ verglichen, um die exakte Abnahme der Profiltiefe tₚ trotz des in der Nichtnutzungsphase N vergrößerten Radius des Reifens 2 korrekt abbilden zu können. Die bislang unweigerlich eintretende Verfälschung des Messergebnisses bei der Betrachtung des dynamischen Rollradius R_{d} an einem Reifen 2, der über einen längeren Zeitraum ungenutzt, beispielsweise eingelagert ist, wird auf diese Weise kompensiert.

Typischerweise wird die Profiltiefe tₚ während des Fahrbetriebs des Fahrzeugs kontinuierlich ermittelt. Dabei kann sowohl ein Absolutwert der Profiltiefe tₚ bestimmt werden als auch eine relative Änderung der Profiltiefe tₚ in Bezug auf einen zuvor ermittelten Wert.

Die Profiltiefe tₚ wird dabei bevorzugt für sämtliche Reifen 2 des Fahrzeugs ermittelt, d. h. das ermitteln der jeweiligen aktuellen Drehgeschwindigkeit, des aktuellen dynamischen Rollradius sowie etwaiger Korrekturwerte erfolgt getrennt für jeden Reifen 2 und wird mit der gemeinsam für alle Reifen 2 ermittelten aktuellen Geschwindigkeit des Fahrzeugs in Relation gesetzt.

Wesentlicher Vorteil des vorangehend geschilderten Verfahrens sowie des Steuergeräts und des Systems für ein Fahrzeug ist es, dass die Qualität der ermittelten Profiltiefenabschätzung des Reifens 2 über den sogenannten rollradiusbasierte Ansatz deutlich verbessert wird. Geometrische Veränderungen der Reifen 2, die schrittweise während der Reifenlagerung auftreten, werden in die Ermittlung einbezogen. Dies ist insbesondere in Märkten von Bedeutung, die eine hohe Zahl von Nutzern aufweisen, welche saisonal die Reifen 2 an ihren Fahrzeugen wechseln.

### Bezugszeichenliste:

- 1:: Felge
- 2:: Reifen
- 20:: dritter Sensor
- 21:: zweiter Sensor
- A₁:: erste Nutzungsphase
- N:: Nichtnutzungsphase
- A₂:: zweite Nutzungsphase
- B:: radiale Beschleunigung
- V:: aktuelle Geschwindigkeit
- K₁:: erste Linie
- K₁':: gedachte Fortsetzung
- K₂:: zweite Linie
- ω:: aktuelle Drehgeschwindigkeit
- R_{d}:: dynamischer Rollradius
- r₀:: ursprünglicher Radius
- rₑ:: Radius zum Ende der Nutzungsdauer
- S₁:: erster Startwert
- S₂:: neuer Startwert
- T₀:: Zeitpunkt des Beginns der Nutzungsdauer
- tₚ:: Profiltiefe
- U:: Untergrund

## Patentansprüche

1. Verfahren zum Ermitteln der Profiltiefe (tₚ) eines Profils eines an einem Fahrzeug auf einer Felge (1) montierten Reifens (2), bei welchem in Nutzungsphasen (A₁, A₂) des Reifens (2) fortlaufend dessen aktueller dynamischer Rollradius (R_{d}) ermittelt wird, indem eine aktuelle Drehgeschwindigkeit (ω) des Reifens (2) aus von einem ersten Sensor ermittelten Daten und eine aktuelle Geschwindigkeit (V) des Fahrzeuges aus von einem zweiten Sensor (21) ermittelten Daten bestimmt werden und auf Basis der ermittelten aktuellen Drehgeschwindigkeit (ω) und der aktuellen Geschwindigkeit (V) des Fahrzeuges der aktuelle dynamische Rollradius (R_{d}) ermittelt wird, **dadurch gekennzeichnet, dass** zu Beginn einer ersten Nutzungsphase (A₁) ein Startwert (S₁) des dynamischen Rollradius (R_{d}) aufgezeichnet wird und aus Abweichungen des aktuellen dynamischen Rollradius (R_{d}) vom Startwert eine aktuelle Profiltiefe (tₚ) des Reifens (2) ermittelt wird, wobei ein aktueller Bewegungsstatus des Reifens (2) aus von einem dritten Sensor (20) ermittelten Daten bestimmt wird, indem bei Vorliegen eines oberhalb eines vorgegebenen Grenzwertes ermittelten Daten eine Nutzungsphase (A₁, A₂) als Bewegungsstatus ermittelt wird und bei Vorliegen von unterhalb eines vorgegebenen Grenzwertes über eine vorbestimmte Zeitdauer ermittelten Daten eine Nichtnutzungsphase (N) als Bewegungsstatus ermittelt wird, und bei einer Änderung des Bewegungsstatus von einer Nichtnutzungsphase (N) zu einer nachfolgenden Nutzungsphase (A₂) die Aufzeichnung eines neuen Startwertes (S₂) des dynamischen Rollradius (R_{d}) bewirkt wird, der anstelle des vorherigen Startwertes mit den nachfolgend ermittelten aktuellen dynamischen Rollradien (R_{d}) zur fortgesetzten Ermittlung der aktuellen Profiltiefe (tₚ) verglichen wird.

2. Verfahren nach Anspruch 1, **dadurch gekennzeichnet, dass** der dritte Sensor (20) die radiale Beschleunigung (B) des Reifens (2) oder die tangentiale Beschleunigung des Reifens (2) oder Änderungen der Beschleunigung des Reifens (2) ermittelt.

3. Verfahren nach Anspruch 1 oder 2, **dadurch gekennzeichnet, dass** der dritte Sensor (20) von einem dem Reifen (2) zugeordneten Sensor eines Reifendruckkontrollsystems (TPMS) bewirkt wird.

4. Verfahren nach einem der Ansprüche 1 bis 3, **dadurch gekennzeichnet, dass** bei Ermittlung einer Nichtnutzungsphase (N) ein Signalwert erzeugt wird.

5. Verfahren nach Anspruch 4, **dadurch gekennzeichnet, dass** ein Zähler für den Signalwert vorgesehen ist, dessen Wert bei jeder Erzeugung eines Signalwertes inkrementell erhöht wird.

6. Verfahren nach einem der Ansprüche 1 bis 5, **dadurch gekennzeichnet, dass** der erste Sensor als Drehzahlsensor ausgebildet ist.

7. Verfahren nach einem der Ansprüche 1 bis 6, **dadurch gekennzeichnet, dass** der zweite Sensor (21) ausgewählt ist aus der Gruppe, umfassend einen satellitengestützten Sensor, einen Radarsensor, einen Lidarsensor, einen Ultraschallsensor und eine optische Kamera.

8. Verfahren nach einem der Ansprüche 1 bis 7, **dadurch gekennzeichnet, dass** bei der Ermittlung der aktuellen Profiltiefe (tₚ) Korrekturfaktoren, umfassend die Reifendimension, Reifendruck, Reifenart, Temperatur, Reifenlast und/oder Reifenalter berücksichtigt werden.

9. Verfahren nach einem der Ansprüche 1 bis 8, **dadurch gekennzeichnet, dass** bei Ermittlung einer Nichtnutzungsphase (N) des Reifens (2) auch die horizontale oder vertikale Orientierung des Reifens (2) ermittelt und zur Bildung eines Korrekturfaktors verwendet wird, der bei der Ermittlung der aktuellen Profiltiefe (tₚ) berücksichtigt wird.

10. Steuergerät für ein Fahrzeug zum Ermitteln der Profiltiefe (tₚ) eines Profils eines auf einer Felge (1) an einem Fahrzeug montierten Reifens (2), umfassend zumindest eine Empfangsvorrichtung zum Empfangen einer aktuellen Drehgeschwindigkeit (ω) des Reifens und einer aktuellen Geschwindigkeit (V) des Fahrzeugs dadurch gekennzeichnert, dass das Steuergerät eine Ermittlungseinrichtung zum Ermitteln eines dynamischen Rollradius (R_{d}) des Reifens (2) basierend auf der aktuellen Drehgeschwindigkeit (ω) des Reifens (2) und der aktuellen Geschwindigkeit (V) des Fahrzeuges sowie Vergleich zu einem festlegbaren Startwert (S₁) zum Ermitteln der Profiltiefe (tₚ) aufweist, wobei die Empfangsvorrichtung zum Empfang eines Nutzungs- und Nichtnutzungsphasen umfassenden Bewegungsstatus ausgebildet ist und die Ermittlungseinrichtung bei Änderung des Bewegungsstatus von einer Nichtnutzungsphase zu einer nachfolgenden Nutzungsphase von der Empfangsvorrichtung derart ansteuerbar ist, dass ein neuer Startwert (S₂) des dynamischen Rollradius (R_{d}) festlegbar und anstelle des Startwertes (S₁) zum Ermitteln der Profiltiefe (tₚ) verwendbar ist.

11. System für ein Fahrzeug zur Ermittlung der Profiltiefe (tₚ)eines Profils eines auf einer Felge (1) an einem Fahrzeug montierten Reifens (2), aufweisend ein Steuergerät nach Anspruch 10, wobei der Bewegungsstatus von einem Sensor eines dem Reifen (2) zugeordneten Reifendruckkontrollsystems erzeugbar ist.

## Claims

1. Method for determining the profile depth (tₚ) of a profile of a tyre (2) fitted on a wheel rim (1) on a vehicle, in which method the current dynamic rolling radius (R_{d}) of the tyre (2) is continually determined in phases of use (A₁, A₂) thereof, in that a current rotational speed (ω) of the tyre (2) is determined from data determined by a first sensor and a current speed (V) of the vehicle is determined from data determined by a second sensor (21) and the current dynamic rolling radius (R_{d}) is determined on the basis of the determined current rotational speed (ω) and the current speed (V) of the vehicle, **characterized in that** a starting value (S₁) of the dynamic rolling radius (R_{d}) is recorded at the beginning of a first phase of use (A₁) and a current profile depth (tₚ) of the tyre (2) is determined from deviations of the current dynamic rolling radius (R_{d}) from the starting value, wherein a current movement status of the tyre (2) is determined from data determined by a third sensor (20), **in that** when there are data determined above a specified limit value a phase of use (A₁, A₂) is determined as the movement status and when there are data determined below a specified limit value over a predetermined time period a phase of non-use (N) is determined as the movement status, and when there is a change in the movement status from a phase of non-use (N) to a subsequent phase of use (A₂) the recording of a new starting value (S₂) of the dynamic rolling radius (R_{d}) is instigated and, instead of the previous starting value, is compared with the subsequently determined current dynamic rolling radii (R_{d}) for the continued determination of the current profile depth (tₚ).

2. Method according to Claim 1, **characterized in that** the third sensor (20) determines the radial acceleration (B) of the tyre (2) or the tangential acceleration of the tyre (2) or changes in the acceleration of the tyre (2).

3. Method according to Claim 1 or 2, **characterized in that** the third sensor (20) takes the form of a sensor of a tyre pressure monitoring system (TPMS) that is assigned to the tyre (2).

4. Method according to one of Claims 1 to 3, **characterized in that** a signal value is generated in the determination of a phase of non-use (N).

5. Method according to Claim 4, **characterized in that** a counter of which the value is incrementally increased each time a signal value is generated is provided for the signal value.

6. Method according to one of Claims 1 to 5, **characterized in that** the first sensor is designed as a rotational-speed sensor.

7. Method according to one of Claims 1 to 6, **characterized in that** the second sensor (21) is selected from the group comprising a satellite-assisted sensor, a radar sensor, a lidar sensor, an ultrasound sensor and an optical camera.

8. Method according to one of Claims 1 to 7, **characterized in that** correction factors, comprising the tyre size, the tyre pressure, the tyre type, the temperature, the tyre load and/or the tyre age, are taken into account in the determination of the current profile depth (tₚ).

9. Method according to one of Claims 1 to 8, **characterized in that** determination of a phase of non-use (N) of the tyre (2) also causes the horizontal or vertical orientation of the tyre (2) to be determined and to be used for forming a correction factor which is taken into account in the determination of the current profile depth (tₚ).

10. Control device for a vehicle for determining the profile depth (tₚ) of a profile of a tyre (2) fitted on a wheel rim (1) on a vehicle, comprising at least one receiving device for receiving a current rotational speed (ω) of the tyre and a current speed (V) of the vehicle, **characterized in that** the control device has a determining device for determining a dynamic rolling radius (R_{d}) of the tyre (2) on the basis of the current rotational speed (ω) of the tyre (2) and the current speed (V) of the vehicle in comparison with a starting value (S₁) that can be fixed for determining the profile depth (tₚ), the receiving device being designed for receiving a movement status comprising phases of use and phases of non-use and, when there is a change in the movement status from a phase of non-use to a subsequent phase of use, the determining device being activatable by the receiving device in such a way that a new starting value (S₂) of the dynamic rolling radius (R_{d}) can be fixed and can be used instead of the starting value (S₁) for determining the profile depth (tₚ).

11. System for a vehicle for determining the profile depth (tₚ) of a profile of a tyre (2) fitted on a wheel rim (1) on a vehicle, having a control device according to Claim 10, it being possible for the movement status to be generated by a sensor of a tyre pressure monitoring system assigned to the tyre (2).

## Revendications

1. Procédé de détermination de la profondeur de profil (tₚ) d'un profil d'un pneu (2) monté sur une jante (1) sur un véhicule, dans lequel, pendant des phases d'utilisation (A₁, A₂) du pneu (2), le rayon de roulement dynamique (R_{d}) actuel de celui-ci est déterminé en continu en définissant une vitesse de rotation actuelle (ω) du pneu (2) à partir de données déterminées par un premier capteur et une vitesse actuelle (V) du véhicule à partir de données déterminées par un deuxième capteur (21) et en déterminant, sur la base de la vitesse de rotation actuelle (ω) déterminée et de la vitesse actuelle (V) du véhicule, le rayon de roulement dynamique (R_{d}) actuel, **caractérisé en ce qu'**au début d'une première phase d'utilisation (A₁), une valeur de départ (S₁) du rayon de roulement dynamique (R_{d}) est enregistrée et une profondeur de profil (tₚ) actuelle du pneu (2) est déterminée à partir des écarts du rayon de roulement dynamique (R_{d}) actuel par rapport à la valeur de départ, un état de mouvement actuel du pneu (2) étant défini à partir de données déterminées par un troisième capteur (20) en déterminant en tant qu'état de mouvement une phase d'utilisation (A₁, A₂) lorsque des données déterminées au-dessus d'une valeur de limite spécifiée sont disponibles et en déterminant une phase de non-utilisation (N) en tant qu'état de mouvement lorsque des données déterminées pendant une durée de temps prédéfinie au-dessous d'une valeur limite spécifiée sont disponibles, et en déclenchant, en cas de changement de l'état de mouvement d'une phase de non-utilisation (N) à une phase d'utilisation (A₂) qui suit, l'enregistrement d'une nouvelle valeur de départ (S₂) du rayon de roulement dynamique (R_{d}), qui est comparée, en lieu et place de la valeur de départ précédente, aux rayons de roulement dynamiques (R_{d}) actuels déterminés ci-après pour la détermination continue de la profondeur de profil (tₚ) actuelle.

2. Procédé selon la revendication 1, **caractérisé en ce que** le troisième capteur (20) détermine l'accélération radiale (B) du pneu (2) ou l'accélération tangentielle du pneu (2) ou des changements de l'accélération du pneu (2).

3. Procédé selon la revendication 1 ou 2, **caractérisé en ce que** le troisième capteur (20) est déclenché par un capteur associé au pneu (2) d'un système de contrôle de pression des pneus (TPMS).

4. Procédé selon l'une des revendications 1 à 3, **caractérisé en ce qu'**une valeur de signal est générée lors de la détermination d'une phase de non utilisation (N).

5. Procédé selon la revendication 4, **caractérisé en ce qu'**un compteur est prévu pour la valeur de signal, dont la valeur est augmentée progressivement à chaque génération d'une valeur de signal.

6. Procédé selon l'une des revendications 1 à 5, **caractérisé en ce que** le premier capteur est formé comme un capteur de vitesse de rotation.

7. Procédé selon l'une des revendications 1 à 6, **caractérisé en ce que** le deuxième capteur (21) est choisi dans le groupe comprenant un capteur assisté par satellite, un capteur radar, un capteur lidar, un capteur à ultrasons et une caméra optique.

8. Procédé selon l'une des revendications 1 à 7, **caractérisé en ce que**, lors de la détermination de la profondeur de profil (tₚ) actuelle, des facteurs de correction, comprenant la dimension du pneu, la pression du pneu, le type de pneu, la température, la charge du pneu et/ou l'âge du pneu, sont pris en compte.

9. Procédé selon l'une des revendications 1 à 8, **caractérisé en ce que**, lors de la détermination d'une phase de non utilisation (N) du pneu (2), l'orientation horizontale ou verticale du pneu (2) est également déterminée et est utilisée pour former un facteur de correction qui est pris en compte lors de la détermination de la profondeur de profil (tₚ) actuelle.

10. Appareil de commande pour un véhicule pour déterminer la profondeur de profil (tₚ) d'un profil d'un pneu (2) monté sur un véhicule sur une jante (1), comprenant au moins un dispositif de réception destiné à recevoir une vitesse de rotation actuelle (ω) du pneu et une vitesse actuelle (V) du véhicule, **caractérisé en ce que** l'appareil de commande comporte un système de détermination destiné à déterminer un rayon de roulement dynamique (R_{d}) du pneu (2) sur la base de la vitesse de rotation actuelle (ω) du pneu (2) et de la vitesse actuelle (V) du véhicule, et à le comparer à une valeur de départ (S₁) pouvant être fixée pour déterminer la profondeur de profil (tₚ), le dispositif de réception étant formé pour recevoir un état de mouvement comprenant des phases d'utilisation et de non utilisation et le système de détermination pouvant être piloté, en cas de changement de l'état de mouvement d'une phase de non utilisation à une phase d'utilisation qui suit du dispositif de réception, de telle manière qu'une nouvelle valeur de départ (S₂) du rayon de roulement dynamique (R_{d}) peut être fixée et utilisée en lieu et place de la valeur de départ (S₁) pour déterminer la profondeur du profil (tₚ).

11. Système pour un véhicule pour déterminer la profondeur de profil (tₚ) d'un profil d'un pneu (2) monté sur un véhicule sur une jante (1), comportant un appareil de commande selon la revendication 10, l'état de mouvement pouvant être généré par un capteur d'un système de contrôle de pression des pneus associé au pneu (2).
